# EUROPEAN PATENT SPECIFICATION

(11) **EP 3 972 194 B1**
(45) Date of publication and mention of the grant of the patent: **18.02.2026**
(21) Application number: 20306038.9
(22) Date of filing: 16.09.2020
(51) Int. Cl.: H04L 12/10

(54) **REDUNDANT POWER SUPPLY UNIT**
REDUNDANTE STROMVERSORGUNGSEINHEIT
UNITÉ D'ALIMENTATION ÉLECTRIQUE REDONDANTE

(43) Date of publication of application: 23.03.2022
(73) Proprietor: Schneider Electric Industries SAS, 92500 Rueil Malmaison (FR)
(72) Inventor: FERRY, Didier, 06510 Le Broc (FR); BIEHLER, AYMERIC, 06800 Cagnes-Sur-Mer (FR)
(74) Representative: Plasseraud IP

(56) References cited:
- EP-A1- 1 942 600
- EP-A1- 3 588 845
- WO-A1-2006/077569
- US-A1- 2012 023 340
- US-A1- 2018 054 083
- US-A1- 2018 239 407

## Description

### FIELD OF THE DISCLOSURE

The present disclosure generally relates to a power supply unit and more specifically to a redundant power supply unit and a power managed system utilizing the redundant power supply module.

### BACKGROUND OF THE DISCLOSURE

This section provides background information related to the present disclosure which is not necessarily prior art.

In many industrial applications multiple power supply units are often employed to provide a power redundancy to the powered subsystems. Typically, one main power supply unit operates as a master unit, and a backup power supply unit operates as a slave unit. In such way, the standby power supply unit is responsible for taking over if the main power supply unit fails. In this type of architecture, it is common that the power supply units are identical and have their input mains connected to the same source. An example of multiple power supply units employed to provide a power redundancy to a powered subsystem can be found for instance in EP 1 942 600 A1, US 2012/023340 A1 or WO 2006/077569 A1. An example of a method and a device for controlling an activation of a terminal can be found for instance in EP 3 588 845 A1.

Such approach bears a disadvantage of having two power supply units vulnerable to power interruption of their input mains. Additionally, provided both power supply units are identical they may be prone to the same failures over the time caused by ageing of internal components, environmental conditions or handling. Last, but not least the need for two power supply units that have essentially same function may be prohibitive in cost sensitive industrial applications.

Therefore, it would be advantageous to have an apparatus that takes into account at least some of the issues discussed above as well as possibly other issues.

### SUMMARY OF THE DISCLOSURE

The present disclosure provides a redundant power supply unit as defined by the independent claim 1 and a rackable system with power redundancy as defined by the independent claim 8. Preferred embodiments are defined in the appended dependent claims.

The redundant power supply unit comprises a first power converter having a mains power input and a power output and a second power converter having a power input and a power output. The redundant power supply unit further comprises an Ethernet port electrically connected to the power input of the second power converter. The Ethernet port is configured to accept Power over Ethernet (PoE) from an external source to power the second power converter. The redundant power supply unit further comprises a redundancy manager electrically connected to the power outputs of the first and the second power converter and configured to selectively output power from one of the power converters. The redundant power supply unit further comprises a DC/DC voltage converter having its input electrically connected to the redundancy manager and configured to output power to an Ethernet backplane. The Ethernet backplane is configured to power a plurality of input and/or output modules mountable at the Ethernet backplane. The redundant power supply unit further comprises a microcontroller electrically connected to the redundancy manager and configured to control the selection of which output power from one of the power converters is to be supplied to the DC/DC voltage converter. The redundant power supply unit may further comprise a smart features module connected to the micro-controller and the smart features module may be configured to selectively control power distribution to the at least one input and/or output module mountable at the Ethernet backplane. The selective control of pow-er distribution at the Ethernet backplane includes a sequential power-up of individual input and/output modules of the plurality of input and/or output modules so as to control an inrush current flowing from the DC/DC voltage converter to the Ethernet backplane.

In another aspect the Ethernet port may be further configured to provide data connection with an outside Ethernet network.

In another aspect, the data connection may include a status of the redundant power supply unit and its configuration.

In another aspect, the external source may be an Ethernet network switch with PoE capability configured to supply power and data connection via a single Ethernet cable.

In another aspect, the redundant power supply unit may further comprises an internal Ethernet network switch that may be electrically connected to the Ethernet port and configured to provide a direct Ethernet access from the outside Ethernet network to the Ethernet backplane and communicate with the at least one input/output device.

In another aspect, the redundant power supply unit may further comprises a display module that may be connected to the microcontroller and may be configured to provide at least one of the following power status information, power and system diagnostic features and/or user input for settings of the power supply unit.

In another aspect, the redundant power supply unit may further comprises a smart features module connected to the microcontroller and the smart features module may be configured to provide data on the redundant power supply conditions including at least one of the lifetime, internal and/or external temperatures, mains and PoE input voltages, real time consumption.

In another aspect, the redundant power supply unit may further comprise a voltage asset manager electrically connected to the mains power input and the microcontroller. The voltage asset manager may be configured to monitor the mains input line voltage.

A further aspect is directed to a rackable system with power redundancy having at least one rack and each of the at least one rack comprises a first redundant power supply unit as described above.

In a further aspect, the rackable system may further comprises a second redundant power supply unit as described above and the second redundant power supply unit may be connected in parallel to the first redundant power supply unit.

In a further aspect, the rackable system may comprise a plurality of racks and the first redundant power supply unit and the second redundant power supply unit may be monitoring each other.

Further areas of applicability will become apparent from the description herein. The description and specific examples in the summary are intended for purposes of illustration only and are not intended to limit the scope of the present disclosure.

### BRIEF DESCRIPTION OF THE DRAWINGS

Other features and advantages of the invention appear from the following detailed description of some of its embodiments, given by way of non-limiting example, and with reference to the accompanying drawings, in which:
- **FIG. 1** is a block diagram depicting an embodiment of a redundant power supply unit.
- **FIG. 2** is a block diagram depicting another embodiment of a redundant power supply unit.
- **FIG. 3** is a block diagram depicting an embodiment of a system utilizing the redundant power supply unit.
- **FIG. 4** is a block diagram depicting another embodiment of the system utilizing the redundant power supply unit.

### DETAILED DESCRIPTION

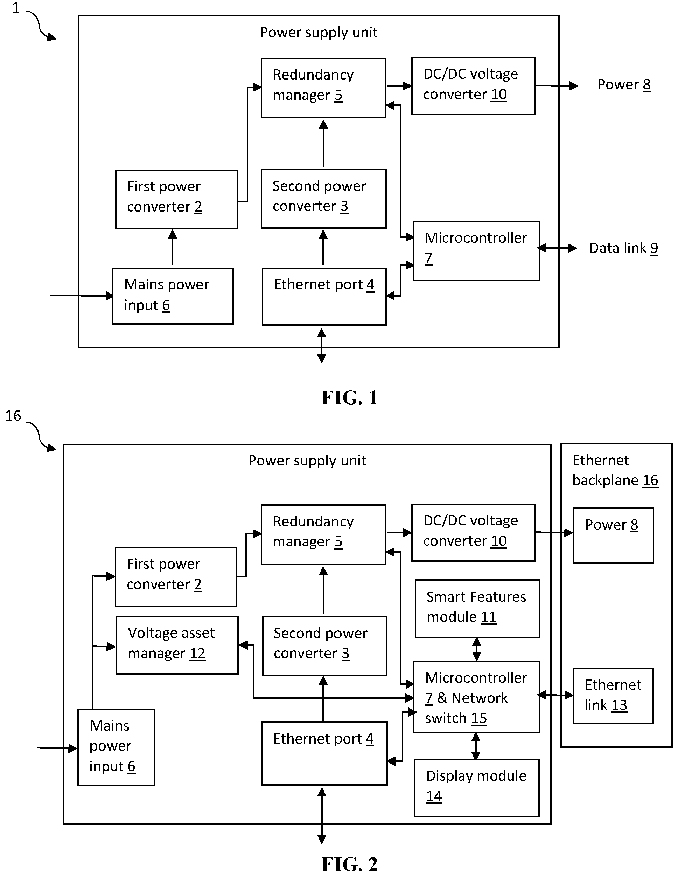

Figure 1 is a block diagram depicting an embodiment of a redundant power supply unit 1. The embodiment includes a mains power input 6 that provides a power input to a first power converter 2. The mains power input 6 may be AC and/or DC power input electrically connectable with an external source. The embodiment further includes an Ethernet port 4 and a second power converter 3 and a microcontroller 7. The second power converter 3 and the microcontroller 7 is be electrically connected to the Ethernet port. The Ethernet port 4 accepts Power over Ethernet (PoE) from an external source to power the second power converter 3. The external source providing POE may be an Ethernet network switch with a PoE capability configured to supply power and data connection via a single Ethernet cable. One benefit is therefore a single cable may be used for both data connection and an external power.

The Ethernet port 4 further provides a data connection between the microcontroller 7 and an outside Ethernet network. The data connection may include a status of the redundant power supply unit 1 and its configuration. The embodiment further includes a redundancy manager 5 and a DC/DC voltage converter 10. The redundancy manager 5 is electrically connected to the power outputs of the first power converter 2 and the second power converter 3. The redundancy manager is further electrically connected to the power input of the DC/DC converter 10 and the microcontroller 7. The redundancy manager 5 selectively outputs power from one of the first and second power converter to the power input of the DC/DC converter 10. The DC/DC voltage converter 10 may output power 8 to the Ethernet backplane. The microcontroller 7 controls the selection of which output power from one of the power converters is to be supplied to the DC/DC voltage converter 10. The microcontroller 7 may further provide a data link 9 connection with the external device.

Referring to Figure 2, an advantageous embodiment 16 of the redundant power supply unit 1 depicted in Figure 1 is shown. The redundant power supply unit 1 may further include a voltage asset manager 12 electrically connected to the microcontroller 7 and to the mains power input 6. The voltage asset manager 12 may monitor the mains input line voltage and may provide status of the mains power input 6 to the microcontroller 7. Based on the status provided by the voltage asset manager 12 the microcontroller 7 may control the redundancy manager 5 to selectively output power to the DC/DC converter 10 from one of the first power converter 2 or the second power converter 3. The voltage asset manager 12 may monitor voltage of the mains input line and provide status of the mains power input 6 to the microcontroller 7 continuously or periodically. The microcontroller 7 may provide the status of the mains power input 6 via the Ethernet port to a remote location where it may be used for diagnostic and/or service purposes. One benefit of such arrangement may be that in case the voltage asset manager 12 provides status of the mains power input 6 voltage being outside an operating range of the first power converter 2 then the microcontroller 7 may control the selection of redundancy manager 5 to output power provided by the second power converter 3 and/or trigger an alarm at a remote location.

As explained above the DC/DC voltage converter 10 outputs power 8 to the Ethernet backplane The Ethernet backplane 16 is configured to power at least one input and/or output module mountable at the Ethernet backplane. The Ethernet backplane 16 is integrated into the redundant power supply unit 1.

The redundant power supply unit 1 may further include an internal Ethernet network switch 15 that may be electrically connected to the Ethernet port 4. The internal Ethernet network switch 15 may provide a direct Ethernet access from an outside Ethernet network to the Ethernet backplane. The internal Ethernet network switch 15 may further provide an Ethernet link 13 connection between the at least one input and/or output module mountable at the Ethernet backplane 16 and an outside Ethernet network.

The redundant power supply unit 1 may further include a display module 14 connected to the microcontroller 7. The display module may provide at least one of the following power status information, power and system diagnostic features and/or user input for settings of the power supply unit.

The redundant power supply unit 1 further includes a smart features module 11 connected to the microcontroller 7. The smart features module 11 may provide data on the redundant power supply conditions including at least one of the lifetime, internal and/or external temperatures, mains and PoE input voltages, real time consumption. The smart features module 11 selectively controls power distribution to the plurality of input and/or output modules mountable at the Ethernet backplane 16. The selective control of power distribution enables a control of an inrush current flowing to the Ethernet backplane 16 having the plurality of input and/output modules. The selective control of power distribution at the Ethernet backplane 16 includes sequential power-up of individual input and/output modules of the plurality of input and/or output modules that may be mounted at the Ethernet backplane 16.

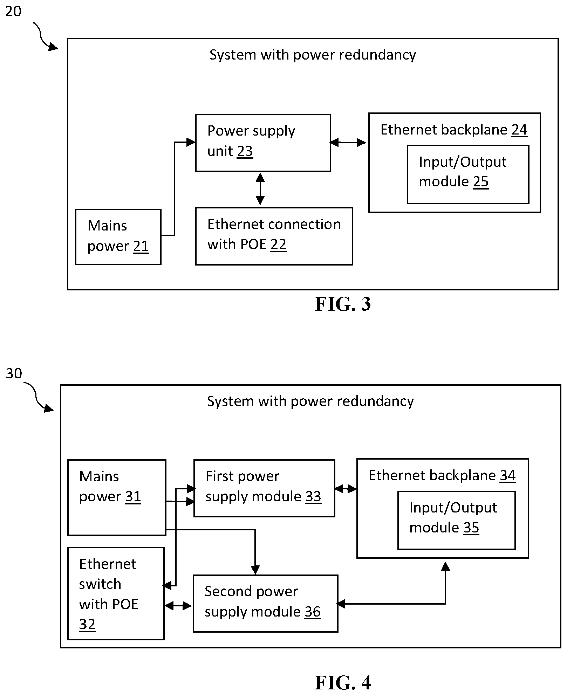

Figure 3 depicts a system with power redundancy 20 that suitable for being mounted in a rack, therefore it is a rackable system. The system with power redundancy 20 includes mains power input 21 to accept power from an external source. The external source may be AC and/or DC power input electrically connectable with the mains power input.

The system with power redundancy 20 includes at least one rack and each of the at least one rack includes a redundant power supply unit 23 as described in previous embodiments. Advantageously, the at least one rack may include more than one power supply units 1, 23 or plurality of racks may share a single redundant power supply unit 1, 23.

The power supply unit 23 is connectable to an external source configured to supply power and data connection. The external source may be an Ethernet connection with a Power Over Ethernet PoE capability. The external source may be a network switch with POE to supply power and data connection via a single Ethernet cable.

Figure 4 depicts an advantageous embodiment of system with power redundancy 30 that may further include a second redundant power supply unit 36. The system 30 with power redundancy may further include an Ethernet switch with POE capability. The second redundant power supply unit 36 may be connected in parallel to the first redundant power supply unit 33. The second redundant power supply unit 34 may be located on the same rack as the first redundant power supply unit 33 or the second power supply unit may be located at a different rack. Each of the first redundant power supply unit 33 and the second redundant power supply unit 34 may be connected to plurality of racks and may be capable to provide power to the plurality of racks. The first redundant power supply unit 33 and the second redundant power supply unit 34 may monitor each other. The first redundant power supply unit 33 and the second redundant power supply unit 34 may communicate with each other either directly and/or via the Ethernet switch with POE 32. The communication between the first redundant power supply unit 33 and the second redundant power unit 34 may include at least one of a status of the redundant power supply unit, an available power at each redundant power supply, a power sharing and/or a power back up request. The Ethernet switch with POE 32 may also provide a connection with an outside Ethernet network that may be used for diagnostic and-or service purposes.

One benefit of having a second redundant power supply unit connected in parallel may be an additional level of redundancy that may be needed in a safety critical system. Another benefit may in better distribution and a utilization of a power capabilities of individual redundant power supply units within the racks.

## Claims

1. A redundant power supply unit (1) comprising:
a first power converter (2) having a mains power input (6) and a power output;
a second power converter (3) having a power input and a power output;
an Ethernet port (4) electrically connected to the power input of the second power converter, wherein the Ethernet port is configured to accept Power over Ethernet, PoE, from an external source to power the second power converter, wherein the Ethernet port is further configured to provide a data connection with an outside Ethernet network;
a redundancy manager (5) electrically connected to the power outputs of the first and the second power converter and configured to selectively output power from one of the power converters;
an Ethernet backplane (16);
a DC/DC voltage converter (10) having its input electrically connected to the redundancy manager and configured to output power to the Ethernet backplane, wherein the Ethernet backplane (16) is configured to power (8) a plurality of input and/or output modules mountable at the Ethernet backplane;
a microcontroller (7) electrically connected to the redundancy manager and configured to control the selection of which output power from one of the power converters is to be supplied to the DC/DC voltage converter, and
a smart features module (11) connected to the microcontroller, wherein the smart features module is configured to selectively control power distribution to the plurality of input and/or output modules, wherein the selective control of power distribution at the Ethernet backplane includes a sequential power-up of individual input and/output modules of the plurality of input and/or output modules so as to control an inrush current flowing from the DC/DC voltage converter to the Ethernet backplane.

2. The redundant power supply unit (1) according to Claim 1, wherein the data connection includes a status of the redundant power supply unit and its configuration.

3. The redundant power supply unit (1) according to Claim 1 or 2, wherein the external source is an Ethernet network switch with PoE capability configured to supply power and data connection via a single Ethernet cable.

4. The redundant power supply unit (1) according to anyone of Claim 1 to 3, further comprising:
an internal Ethernet network switch (15) electrically connected to the Ethernet port and configured to provide a direct Ethernet access from the outside Ethernet network to the Ethernet backplane and communicate with the plurality of input and or output modules.

5. The redundant power supply unit (1) according to anyone of Claim 1 to 4, further comprising:
a display module (14) connected to the microcontroller and configured to provide at least one of the following power status information, power and system diagnostic features and/or user input for settings of the power supply unit.

6. The redundant power supply unit (1) according to anyone of Claim 1 to 5,
wherein the smart features module is configured to provide data related to conditions of the redundant power supply unit including at least one of the lifetime, internal and/or external temperatures, mains and PoE input voltages, real time consumption.

7. The redundant power supply unit (1) according to anyone of Claim 1 to 6, further comprising:
a voltage asset manager (12) electrically connected to the mains power input and the microcontroller, the voltage asset manager is configured to monitor the mains input line voltage.

8. A rackable system with power redundancy (20) comprising:
at least one rack, wherein each of the at least one rack comprises a first redundant power supply unit (23) according to anyone of Claim 1 to 7.

9. The rackable system according to Claim 8, further comprising a second redundant power supply unit (36) according to anyone of Claim 1 to 7, wherein the second redundant power supply unit is connected in parallel to the first redundant power supply unit.

10. The rackable system according to Claim 9, comprising plurality of racks, wherein the first redundant power supply unit (33) and the second redundant power supply unit (36) are configured to monitor each other.

## Patentansprüche

1. Redundante Stromversorgungseinheit (1), umfassend:
einen ersten Stromwandler (2) mit einem Netzstromeingang (6) und einem Stromausgang;
einen zweiten Stromwandler (3) mit einem Stromeingang und einem Stromausgang;
einen Ethernet-Anschluss (4), der elektrisch mit dem Stromeingang des zweiten Stromwandlers verbunden ist, wobei der Ethernet-Anschluss so konfiguriert ist, dass er Power over Ethernet, PoE, von einer externen Quelle zu der Stromversorgung des zweiten Stromwandlers akzeptiert, wobei der Ethernet-Anschluss ferner so konfiguriert ist, dass er eine Datenverbindung mit einem externen Ethernet-Netzwerk bereitstellt;
einen Redundanzmanager (5), der elektrisch mit den Stromausgängen des ersten und des zweiten Stromwandlers verbunden und so konfiguriert ist, dass er selektiv Strom aus einem der Stromwandler ausgibt;
eine Ethernet-Backplane (16);
einen DC/DC-Spannungswandler (10), dessen Eingang elektrisch mit dem Redundanzmanager verbunden und so konfiguriert ist, dass er Strom an die Ethernet-Backplane ausgibt, wobei die Ethernet-Backplane (16) so konfiguriert ist, dass sie eine Vielzahl von Eingangs- und/oder Ausgangsmodulen mit Strom versorgt (8), die an die Ethernet-Backplane montierbar sind;
einen Mikrocontroller (7), der elektrisch mit dem Redundanzmanager verbunden und so konfiguriert ist, dass er die Auswahl steuert, welcher Ausgangsstrom von einem der Stromwandler an den DC/DC-Spannungswandler geliefert werden soll, und
ein intelligentes Merkmalsmodul (11), das mit dem Mikrocontroller verbunden ist, wobei das intelligente Merkmalsmodul so konfiguriert ist, dass es die Stromverteilung an die Vielzahl von Eingangs- und/oder Ausgangsmodulen selektiv steuert, wobei die selektive Steuerung der Stromverteilung an der Ethernet-Backplane ein sequenzielles Einschalten einzelner Eingangs- und/oder Ausgangsmodule der Vielzahl von Eingangs- und/oder Ausgangsmodulen enthält, um einen Einschaltstrom zu steuern, der von dem DC/DC-Spannungswandler zu der Ethernet-Backplane fließt.

2. Redundante Stromversorgungseinheit (1) nach Anspruch 1, wobei die Datenverbindung einen Status der redundanten Stromversorgungseinheit und deren Konfiguration enthält.

3. Redundante Stromversorgungseinheit (1) nach Anspruch 1 oder 2, wobei die externe Quelle ein Ethernet-Netzwerk-Switch mit PoE-Fähigkeit ist, der so konfiguriert ist, dass er Strom und eine Datenverbindung über ein einziges Ethernet-Kabel liefert.

4. Redundante Stromversorgungseinheit (1) nach einem der Ansprüche 1 bis 3, ferner umfassend:
einen internen Ethernet-Netzwerk-Switch (15), der elektrisch mit dem Ethernet-Anschluss verbunden und so konfiguriert ist, dass er einen direkten Ethernet-Zugriff von dem externen Ethernet-Netzwerk auf die Ethernet-Backplane bereitstellt und mit der Vielzahl von Eingangs- und/oder Ausgangsmodulen kommuniziert.

5. Redundante Stromversorgungseinheit (1) nach einem der Ansprüche 1 bis 4, ferner umfassend:
ein Anzeigemodul (14), das mit dem Mikrocontroller verbunden und so konfiguriert ist, dass es mindestens eine der folgenden Stromstatusinformationen, Strom- und Systemdiagnosefunktionen und/oder Benutzereingaben für Einstellungen der Stromversorgungseinheit bereitstellt.

6. Redundante Stromversorgungseinheit (1) nach einem der Ansprüche 1 bis 5,
wobei das intelligente Merkmalsmodul so konfiguriert ist, dass es Daten in Bezug auf Bedingungen der redundanten Stromversorgungseinheit bereitstellt, darunter mindestens eine von Lebensdauer, interne und/oder externe Temperatur, Netz- und PoE-Eingangsspannungen, Echtzeitverbrauch.

7. Redundante Stromversorgungseinheit (1) nach einem der Ansprüche 1 bis 6, ferner umfassend:
einen Spannungs-Asset-Manager (12), der elektrisch mit dem Netzstromeingang und dem Mikrocontroller verbunden ist, wobei der Spannungs-Asset-Manager so konfiguriert ist, dass er die Netzeingangsleitungsspannung überwacht.

8. Rackfähiges System mit Stromredundanz (20), umfassend:
mindestens ein Rack, wobei jedes der mindestens einen Racks eine erste redundante Stromversorgungseinheit (23) nach einem der Ansprüche 1 bis 7 umfasst.

9. Rackfähiges System nach Anspruch 8, ferner umfassend eine zweite redundante Stromversorgungseinheit (36) nach einem der Ansprüche 1 bis 7, wobei die zweite redundante Stromversorgungseinheit parallel zu der ersten redundanten Stromversorgungseinheit verbunden ist.

10. Rackfähiges System nach Anspruch 9, umfassend eine Vielzahl von Racks, wobei die erste redundante Stromversorgungseinheit (33) und die zweite redundante Stromversorgungseinheit (36) so konfiguriert sind, dass sie einander überwachen.

## Revendications

1. Unité d'alimentation redondante (1) comprenant :
un premier convertisseur de puissance (2) ayant une entrée (6) de puissance secteur et une sortie de puissance ;
un deuxième convertisseur de puissance (3) ayant une entrée de puissance et une sortie de puissance ;
un port Ethernet (4) connecté électriquement à l'entrée de puissance du deuxième convertisseur de puissance, dans lequel le port Ethernet est configuré pour accepter une alimentation électrique par Ethernet, PoE, d'une source externe pour alimenter le deuxième convertisseur de puissance, dans lequel le port Ethernet est en outre configuré pour fournir une connexion de données avec un réseau Ethernet externe ;
un gestionnaire de redondance (5) connecté électriquement aux sorties d'alimentation du premier et du deuxième convertisseur de puissance et configuré pour délivrer sélectivement une alimentation à partir de l'un des convertisseurs de puissance ;
un fond de panier Ethernet (16) ;
un convertisseur de tension CC/CC (10) ayant son entrée connectée électriquement au gestionnaire de redondance et configuré pour délivrer en sortie une alimentation au fond de panier Ethernet, dans lequel le fond de panier Ethernet (16) est configuré pour alimenter (8) une pluralité de modules d'entrée et/ou de sortie montables au niveau du fond de panier Ethernet ;
un microcontrôleur (7) connecté électriquement au gestionnaire de redondance et configuré pour contrôler la sélection de la puissance de sortie provenant de l'un des convertisseurs de puissance qui doit alimenter le convertisseur de tension CC/CC, et
un module de fonctionnalités intelligentes (11) connecté au microcontrôleur, dans laquelle le module de fonctionnalités intelligentes est configuré pour contrôler sélectivement la distribution de puissance à la pluralité de modules d'entrée et/ou de sortie, dans laquelle le contrôle sélectif de la distribution de puissance au niveau du fond de panier Ethernet inclut une mise sous tension séquentielle de modules d'entrée et/ de sortie individuels de la pluralité de modules d'entrée et/ou de sortie de façon à contrôler un courant d'appel circulant depuis le convertisseur de tension CC/CC vers le fond de panier Ethernet.

2. Unité d'alimentation redondante (1) selon la revendication 1, dans laquelle la connexion de données inclut un statut de l'unité d'alimentation redondante et sa configuration.

3. Unité d'alimentation redondante (1) selon la revendication 1 ou 2, dans laquelle la source externe est un commutateur réseau Ethernet avec capacité PoE configuré pour une alimentation en puissance et connexion de données via un seul câble Ethernet.

4. Unité d'alimentation redondante (1) selon l'une quelconque de la revendication 1 à 3, comprenant en outre :
un commutateur de réseau Ethernet interne (15) connecté électriquement au port Ethernet et configuré pour fournir un accès Ethernet direct du réseau Ethernet externe au fond de panier Ethernet et communiquer avec la pluralité de modules d'entrée et/ou de sortie.

5. Unité d'alimentation redondante (1) selon l'une quelconque de la revendication 1 à 4, comprenant en outre :
un module d'affichage (14) connecté au microcontrôleur et configuré pour fournir au moins une parmi les informations de statut de puissance suivantes, des fonctionnalités de diagnostic de puissance et de système et/ou une entrée utilisateur pour des réglages de l'unité d'alimentation.

6. Unité d'alimentation redondante (1) selon l'une quelconque de la revendication 1 à 5,
dans laquelle le module de fonctionnalités intelligentes est configuré pour fournir des données relatives aux conditions de l'unité d'alimentation redondante incluant au moins une parmi la durée de vie, les températures internes et/ou externes, les tensions d'entrée secteur et PoE, la consommation en temps réel.

7. Unité d'alimentation redondante (1) selon l'une quelconque de la revendication 1 à 6, comprenant en outre :
un gestionnaire d'actifs de tension (12) connecté électriquement à l'entrée de puissance secteur et au microcontrôleur, le gestionnaire d'actifs de tension est configuré pour surveiller la tension de ligne d'entrée secteur.

8. Système installable sur bâti avec redondance d'alimentation (20) comprenant :
au moins un bâti, dans lequel chacun de l'au moins un bâti comprend une première unité d'alimentation redondante (23) selon l'une quelconque de la revendication 1 à 7.

9. Système installable sur bâti selon la revendication 8, comprenant en outre une deuxième unité d'alimentation redondante (36) selon l'une quelconque de la revendication 1 à 7, dans lequel la deuxième unité d'alimentation redondante est connectée en parallèle à la première unité d'alimentation redondante.

10. Système installable sur bâti selon la revendication 9, comprenant une pluralité de bâtis, dans lequel la première unité d'alimentation redondante (33) et la deuxième unité d'alimentation redondante (36) sont configurées pour se surveiller mutuellement.
